# EUROPEAN PATENT SPECIFICATION

(11) **EP 1 038 725 B1**
(45) Date of publication and mention of the grant of the patent: **01.12.2004**
(21) Application number: 99121545.0
(22) Date of filing: 29.10.1999
(51) Int. Cl.: B60P 3/077

(54) **Pivotable chock for vehicle transporter**
Schwenkbarer Radkeil für Fahrzeugtransporter
Cale pivotante pour porte-véhicules

(30) Priority: 19.03.1999 IT TO990213
(43) Date of publication of application: 27.09.2000
(73) Proprietor: ROLFO S.p.A., I-12042 Bra (Cuneo) (IT)
(72) Inventor: Rolfo, Roberto, 12042 Bra (CN) (IT)
(74) Representative: Garavelli, Paolo

(56) References cited:
- EP-A- 0 128 992
- EP-A- 0 344 661
- DE-C- 940 203
- FR-A- 2 284 481
- FR-A- 2 725 946
- US-A- 2 623 759

## Description

The present invention refers to a tiltable chock according to the preamble of claims 1 and 2, for stopping wheels of motor vehicles being loaded on road vehicles, and to a stopping device according to claim 12 using such chock. A chock of that type is disclosed in DE 940203A.

Road vehicles to transport motor vehicles are equipped with one or more loading flatbeds, mutually overlapped, on which motor vehicles to be transported are placed.

Such motor vehicles to be transported, after having been placed on loading flatbeds, are locked to avoid the longitudinal movement thereof, by placing a suitable chock against their wheels, frontally with respect to the travelling direction of the transporting vehicle.

Most known chocks are made integral with the loading flatbed by being coupled to adequate drillings into the flatbed itself.

These chocks however have some inconveniences, among which:
- the need of removing them from the moving paths of motor vehicle wheels to be loaded, when they are not used, because otherwise they would create an obstacle during motor vehicle loading and unloading operations;
- during motor vehicle loading and unloading operations, there is the risk of losing the chocks, forgetting them on the ground or on the flatbed without having secured them thereto: therefore, in addition to losing the chock, there is a severe danger of losing it when travelling, with the risk of causing accidents.

DE-A-940 203, EP-A-0 344 661, FR-A-2 284 481 and US-A-2 623 759 all disclose wheel chocks for wheeled vehicles of the type that occupies a working position in which the chock prevents the vehicle wheels from moving during transports, and a rest position in which the chock does not pose any obstacle to the passage of the vehicle wheels thereabove.

In particular, DE-A-940 203, which is the closest prior art, discloses a tiltable chock, which has to be actuated by a lever between its resting and operating positions; in addition, when unloading vehicles, this lever must be actuated beforehand and it is then not possible to push the chock in its rest position by means of the wheel of the vehicle being unloaded. Moreover, the chock is structured as to grasp the wheels on their sides.

The main object of the present invention is solving the above prior-art problems, by providing an improved chock suitable to greatly shorten the time necessary to position it in order to lock or unlock motor vehicles loaded on flatbeds, being it able to be automatically tilted till it disappears into a suitable recess that is flush with the loading flatbed, not providing thereby any obstacle to wheel transit, or allowing it to be tilted in the working position.

A further object of the present invention is providing an improved chock that, during motor vehicle unloading operations, is so shaped that motor vehicle wheels, by acting on the chock being used, in its working position, to stop the first motor vehicle being unloaded, automatically tilt the chock when the second motor vehicle to be unloaded passes, such operation being repeated for all following motor vehicles to be unloaded.

The chock placement will be distributed on loading flatbeds, depending on the positioning of the different motor vehicles being chosen for the load to be transported.

Moreover, it will be possible to make the device movable, being it composed of a left chock and a right chock, and also with a version with independent chocks, thereby modifying the longitudinal position on loading flatbeds, depending on the position of motor vehicle wheels to be loaded.

A further possibility is realizing independent chocks, that are not embedded any more into the flatbed, but are positioned on the flatbed itself.

The above and other objects and advantages of the invention, as will appear from the following description, are obtained by a tiltable chock and a stopping device as claimed in Claims 1, 2 and 12. Preferred embodiments and non-trivial variations of the present invention are claimed in the dependent Claims.

The present invention will be better described by some preferred embodiments thereof, given as a non-limiting example, with reference to the enclosed drawings, in which:
- Figure 1 is a plan view of a portion of a loading flatbed where a preferred embodiment of the assembly is shown with the left and right chocks being tilted in a rest position disappearing into the recess that is flush with the loading flatbed;
- Figures 2 and 3 show two sections, respectively on lines A-A and B-B in Fig. 1, that show the chock and its kinematic motion in the working and rest positions, in the version with coupled chocks;
- Figure 4 shows an exploded view and the sections of some chock parts;
- Figure 4A is a side view of the bracket of the chock of the invention;
- Figure 5 shows the chock section, with a containing recess, in the version embedded into the loading flatbed; and
- Figure 5A shows the chock section, with a containing recess, in the version not embedded into the loading flatbed, but positioned thereabove.

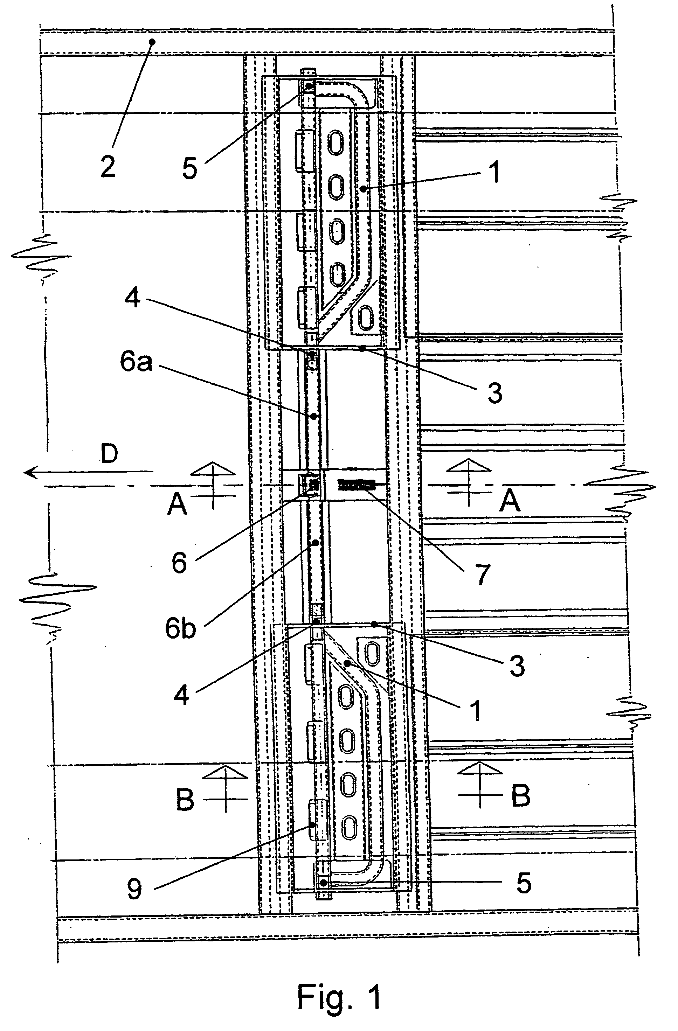

With reference to Figs. 1 to 4, a preferred embodiment of the present invention is shown, equipped with coupled chocks.

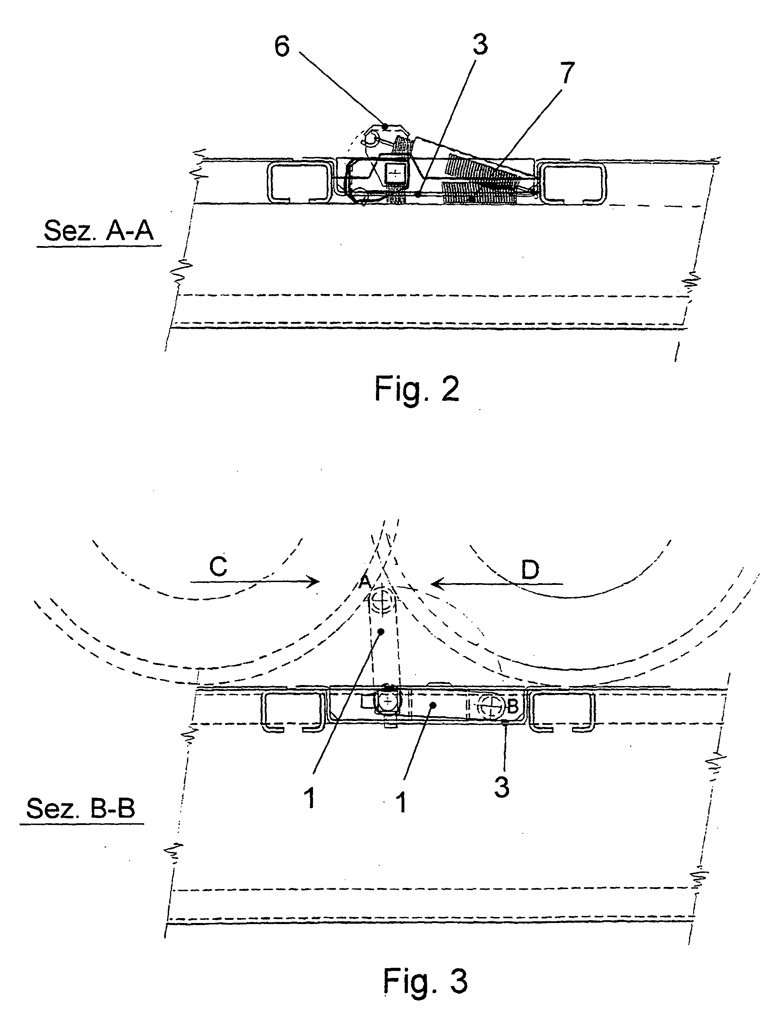

According to such embodiment, the objects of the invention are obtained through a chock 1 made integral with the loading flatbed 2, housed into a recess 3, embedded into the flatbed 2. Such chock 1 preferably comprises a quadrilateral-shaped metallic bar with different geometrical shapes; the chock 1 is keyed on pins 4 and 5, which operate as hinges. Therefore, the chock 1 moves along an arc of a circle from the working position A to the rest position B, disappearing into the recess 3, thereby avoiding to create an obstacle to the passage of motor vehicle wheels (shown with a hatched line in Fig. 3) during loading (direction of arrow D in Figs. 1 and 3) and unloading (direction of arrow C in Fig. 3) operations.

The movement of chock 1, from its working position A to its rest, disappeared position B, can occur both with the operator intervention, and through the motor vehicle wheel action when unloading.

In order to take back the chock 1 into its working position A from its rest position B, the operator can operate both manually (through for example common stripes or other lifting means able to be grasped, not shown), and by exercising a pressure with his foot on the bracket 6, which, by rotating by 90° on pins 4 and 5 and being integral with the left chock and the right chock through the two arms 6a and 6b secured at their ends with pegs to pins 4, make it tilt until it stops at the end of its stroke.

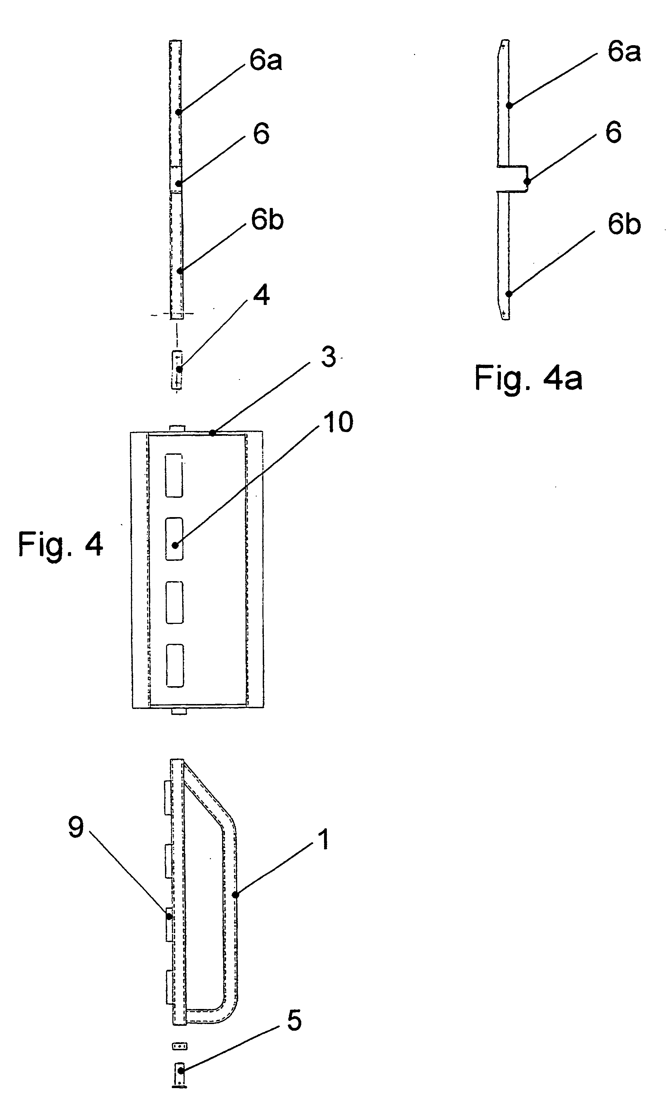

The system for locking the chocks in their working position A is practiced through a device with spring 7, shown more in detail in Fig. 2, which is based on a spring assembly that reaches and exceeds a working dead center, to efficiently obtain and keep the working position A. Fig. 2 shows with hatched lines the position of bracket 6 and spring 7 when unlocking the chock 1, and shows with continuous lines the position of bracket 6 and spring 7 in the rest position, once having exceeded the dead center given by a maximum stretching point of the spring 7 itself. A similar operation can be obtained through the particular arrangement of the chock 1 and the recess 3, as better appears from Fig. 4. Such arrangement, that is shown as a non-limiting example, provides the presence of a plurality of teeth 9 adapted to be placed into corresponding openings 10 of the recess 3 to keep the chock 1 in its erect operating position when locking.

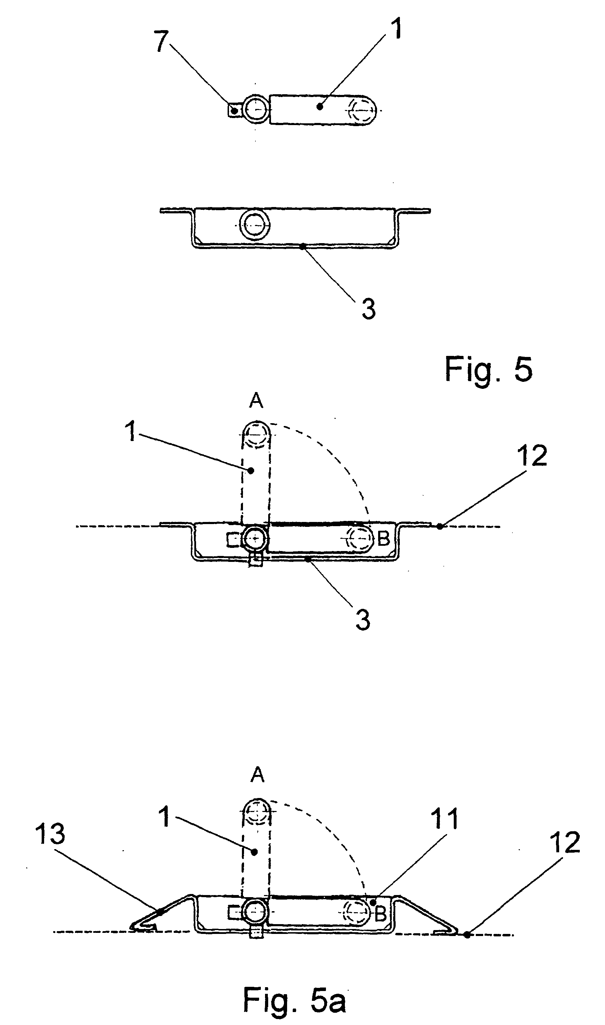

Fig. 5A shows an operating variation of the invention, wherein a recess 11 is provided for containing the chock that is not embedded under the level 12 of the loading flatbed, but is placed thereabove, securing then the recess with adequate fixing means (not shown), and it has on its sides a pair of chutes 13 with such a slope that they do not hinder the motor vehicle loading and unloading operations.

As stated above, it is then possible to provide a stopping device for motor vehicle wheels comprising at least one (and preferably two) of the above-described chocks 1, in a mutually parallel or independent relationship.

As will appear evident to persons skilled in the art, numerous variations and modifications of the chock of the present invention are possible, without departing from the field of application and the scope of the invention as defined in the enclosed claims. For example, it will be sufficient to provide a single chock 1 in order to guarantee the perfect unmovability of motor vehicles on the flatbed, or two or more of them could be provided according to the applications.

Moreover, the chocks 1 could be mutually transversally aligned, or displaced, due to their installation flexibility that allows uncoupling them, even operatively.

In addition to the above-described manual or pedal controls, in order to take the chock 1 of the present invention into its operating positions A and B, various types of commands could be provided, for example pneumatic, hydraulic, electric or remote controls, etc., for a parallel and simultaneous movement of the chocks 1, or dedicated only to some of them, always according to the applications.

The angle between the two working A and rest B positions of the chock 1 has beed shown as equal to about 90° (assuming that the rest position is obtained with an angle of 0° with respect to the loading flatbed 12 plane), but obviously other arrangements can be adopted wherein the angle itself is lower or greater than 90°, obviously provided that it always guarantees the motor vehicle lock during transports: for this purpose, the range of angular positions that guarantees such lock goes from about 60° to about 135° with respect to the loading flatbed 12 plane.

## Claims

1. Tiltable chock (1)for stopping wheels of motor vehicles loaded on road vehicles, said chock (1) being swingable about a transverse axis with respect to the motor vehicles loading and unloading direction, said chock (1) being adapted to occupy a working position (A) in which it prevents the motor vehicle wheels from moving during transports, and a rest position (B) in which it does not pose any obstacle to the passage of motor vehicle wheels thereabove, said chock (1) in its rest position (B) disappearing by being contained inside a containing recess (3, 11),
**characterised in that**:
- said chock (1), in its working position (A), is adapted, during motor vehicle unloading operations and after a first vehicle has been unloaded, to be tilted and pushed to its rest position (B) by the wheels of the following vehicles being unloaded after the first vehicle; and
- said chock (1) is equipped with a device with a spring (7) adapted to take said chock (1) into its working position (A) and adapted to keep said chock (1) in its rest position (B) when it is pushed in such position upon exceeding the working dead center of said device with spring (7).

2. Tiltable chock (1) for stopping wheels of motor vehicles loaded on road vehicles, said chock (1) being swingable about a transverse axis with respect to the motor vehicles loading and unloading direction, said chock (1) being adapted to occupy a working position (A) in which it prevents the motor vehicle wheels from moving during transports, and a rest position (B) in which it does not pose any obstacle to the passage of motor vehicle wheels thereabove, said chock (1) in its rest position (B) disappearing by being contained inside a containing recess (3, 11),
**characterised in that**:
- said chock (1), in its working position (A), is adapted, during motor vehicle unloading operations and after a first vehicle has been unloaded, to be tilted and pushed to its rest position (B) by the wheels of the following vehicles being unloaded after the first vehicle; and
- said chock (1) is equipped with a plurality of teeth (9), said teeth (9) cooperating with a respective plurality of corresponding openings (10) in said recess (3, 11) in order to keep said chock (1) in its working position (A).

3. Tiltable chock (1) according to Claim 1 or 2, **characterised in that** it further comprises a quadrilateral-shaped metallic bar that, in its rest position (B) is placed at an angle of 0° with respect to the loading flatbed (12) and in its working position (A) is placed at an angle that ranges from 60° to 135°.

4. Tiltable chock (1) according to Claim 3, **characterised in that** the angle between rest position (B) and working position (A) is equal to 90°.

5. Tiltable chock (1) according to any one of the previous Claims, **characterised in that** said containing recess (3) is placed under the loading flatbed (12) plane of said road vehicle.

6. Tiltable chock (1) according to any one of Claims 1 to 4, **characterised in that** said containing recess (11) is placed above the loading flatbed (12) plane of said road vehicle, said recess (11) being equipped with chutes (13) for the passage of wheels of said motor vehicles when loading and unloading said motor vehicles.

7. Tiltable chock (1) according to any one of the previous Claims, **characterised in that** it further comprises control means adapted to displace said chock (1) into its working (A) and rest (B) positions.

8. Tiltable chock (1) according to Claim 7, **characterised in that** said control means are composed of manual means for pulling said chock (1) in its working position (A) and of pedal means (6) to free said chock (1) from its working position (A) and allow it to be pushed into its rest position (B) by motor vehicle wheels when unloading them.

9. Tiltable chock (1) according to Claim 7, **characterised in that** said control means are composed of manual means to pull said chock (1) in its working position (A) and of pedal means (6) to take said chock (1) back from its working position (A) to its rest position (B).

10. Tiltable chock (1) according to Claim 7, **characterised in that** said control means are composed of pedal means (6).

11. Tiltable chock (1) according to Claim 7, **characterised in that** said control means are composed of pneumatic, hydraulic and/or electric means.

12. Device for stopping wheels of motor vehicles being loaded on road vehicles, **characterized in that** it comprises at least one tiltable chock (1) according to any one of Claims 1 to 11.

13. Device according to Claim 12, **characterised in that** the tiltable chocks (1) are two.

14. Device according to Claim 13, **characterised in that** the two chocks (1) are able to turn about the same axis and are mutually connected by a bracket (6) equipped with arms (6a, 6b) for the connection to the two chocks (1).

15. Device according to Claim 14, **characterised in that** said bracket (6) is adapted to control and/or enable the displacement of the two chocks (1) into their respective working (A) and rest (B) positions, and, when said bracket (6) enables the displacement from the working position (A) to the rest position (B), said displacement being performed by the motor vehicle wheels when unloading.

16. Device according to Claim 14, **characterised in that** said bracket (6) is adapted to control and/or enable the displacement of the two chocks (1) from their respective working positions (A) to their respective rest positions (B), and, when said bracket (6) enables the displacement from the working position (A) to the rest position (B), said displacement being performed by the motor vehicle wheels when unloading, each one of said two chocks (1) being further equipped with manual means to take it from its rest position (B) to its working position (A).

17. Device according to Claim 12 or 13, **characterised in that** said chocks (1) can be controlled, through control means, in a mutually independent way in their respective working (A) and rest (B) positions.

18. Device according to Claim 17, **characterised in that** said control means are of the pneumatic, hydraulic and/or electric type.

## Patentansprüche

1. Einklappbarer Keil (1) für die Blockierung der Räder der auf Straßenfahrzeuge aufgeladenen Autos, wobei dieser Keil (1) um eine quer zur Lade- und Entladerichtung der Fahrzeuge liegende Achse rotiert, wobei dieser Keil (1) eine Arbeitsstellung (A) einnimmt, in der er die Bewegung der Autoräder während dem Transport verhindert, und eine Ruhestellung (B), in der er nicht den Räderdurchgang der Autos darüber behindert, wobei dieser Keil (1) in seiner Ruhestellung (B) in eine Aussparung (3, 11) eingeklappt werden kann,
charakterisiert durch die Tatsache, dass:
- dieser Keil (1), aus seiner Arbeitsstellung (A), während der Abladevorgänge der Autos und nach Entladung eines ersten Autos durch die Räder der folgenden Autos, die nach dem ersten entladen werden, in seine Ruhestellung (B) umgeklappt wird; und dass
- dieser Keil (1) mit einer Federvorrichtung (7) ausgestattet ist, die den Keil (1) in seine Arbeitsstellung (A) bringt und in der Lage ist, diesen Keil (1) in seiner Ruhestellung (B) zu halten, wenn er nach Überschreiten des Arbeitstodpunktes der Federvorrichtung (7) in diese Stellung gebracht wird.

2. Einklappbarer Keil (1) für die Blockierung der auf Straßenfahrzeuge aufgeladenen Autos, wobei dieser Keil (1) um eine Achse quer zur Auf- und Entladerichtung der Autos dreht, wobei dieser Keil (1) in der Lage ist, eine Arbeitsstellung (A) einzunehmen, in der er die Bewegung der Autoräder während des Transportes verhindert, und eine Ruhestellung (B), in der er nicht den Raddurchgang der Autos behindert, wobei dieser Keil (1) in seine Ruhestellung (B) in eine Aufnahme (3, 11) eingeklappt wird,
charakterisiert durch die Tatsache, dass:
- besagter Keil (1), aus seiner Arbeitsstellung (A) während der Abladevorgänge der Autos und nach Entladung eines ersten Autos durch die Räder der folgenden Autos, die nach dem ersten entladen werden, in seine Ruhestellung (B) umgeklappt wird; und dass
- besagter Keil (1) mit mehreren Zähnen (9) ausgerüstet ist, diese Zähne (9) entsprechen einer gleichen Anzahl von Öffnungen (10) in dem besagten Hohlraum (3, 11) mit dem Zweck, den Keil (1) in seiner Arbeitsposition (A) zu halten.

3. Einklappbarer Keil (1) gemäß der Beanspruchung 1 oder 2, charakterisiert durch die Tatsache, dass er weiterhin ein aus einem Metallstab gebildetes Viereck (B) enthält, das sich in der Ruhestellung (B) in einem Winkel zu 0° gegenüber der Ladefläche (12) befindet und in der Arbeitsstellung (A) in einem variablen Winkel von 60° bis 135°.

4. Einklappbarer Keil (1) gemäß der Beanspruchung 3, charakterisiert durch die Tatsache, dass der Winkel zwischen Ruhestellung (B) und Arbeitsstellung (A) 90° beträgt.

5. Einklappbarer Keil (1) gemäß einer der vorherigen Beanspruchungen, charakterisiert durch die Tatsache, dass sich die Aufnahme (3) unter dem Niveau der Ladefläche (12) des Straßenfahrzeugs befindet.

6. Einklappbarer Keil (1) gemäß einer beliebigen Beanspruchung von 1 bis 4, charakterisiert durch die Tatsache, dass sich die Aufnahme (11) oberhalb der Ladefläche (12) des betreffenden Straßenfahrzeugs befindet, wobei diese Aufnahme (11) mit geneigten Flächen (13) für den Durchgang der Räder bei Auf-/Entladung der Autos versehen ist.

7. Einklappbarer Keil (1) gemäß einer beliebigen vorherigen Beanspruchung, charakterisiert durch die Tatsache, dass er noch andere Steuermittel enthält, die für die Verlagerung des besagten Keils (1) in seine Arbeitsstellung (A) und Ruhestellung (B) dienen.

8. Einklappbarer Keil (1) gemäß der Beanspruchung 7, charakterisiert durch die Tatsache, dass die besagten Steuermittel aus manuellen Mitteln für Zug des besagten Keils (1) in seine Arbeitsposition (A) und Pedalen (6) für die Freigabe des Keils (1) aus seiner Arbeitsposition (A) bestehen und die Rückkehr in seine Ruhestellung (B) durch die Räder der abgeladenen Autos erfolgt.

9. Einklappbarer Keil (1) gemäß Beanspruchung 7, charakterisiert durch die Tatsache, dass die besagten Steuermittel aus manuellen Mitteln für Zug des besagten Keils (1) in seine Arbeitsposition (A) und Pedalen (6) für die Rückkehr des Keils (1) aus seiner Arbeitsposition (A) in seine Ruhestellung (B) bestehen.

10. Einklappbarer Keil (1) gemäß Beanspruchung 7, charakterisiert durch die Tatsache, dass die besagten Steuermittel Pedale (6) sind.

11. Einklappbarer Keil (1) gemäß der Beanspruchung 7, charakterisiert durch die Tatsache, dass die besagten Steuermittel pneumatisch, hydraulisch und/oder elektrisch sind.

12. Blockierungsvorrichtung der Räder der auf die Straßenfahrzeuge aufgeladenen Autos, charakterisiert durch die Tatsache, dass sie wenigstens einen klappbaren Keil (1) gemäß einer beliebigen Beanspruchung von 1 bis 11 enthält.

13. Vorrichtung gemäß der Beanspruchung 12, charakterisiert durch die Tatsache, dass es sich um zwei klappbare Keile (1) handelt.

14. Vorrichtung gemäß der Beanspruchung 13, charakterisiert durch die Tatsache, dass die zwei Keile (1) sich um ihre eigene Achse drehen und mit einem Stab (6) verbunden sind, der mit Armen (6a, 6b) für die Verbindung der beiden Keile (1) ausgestattet ist.

15. Vorrichtung gemäß der Beanspruchung 14, charakterisiert durch die Tatsache, dass der besagte Stab (6) die Verlagerung der beiden Keile (1) in ihre Arbeitsstellung (A) und Ruhestellung (B) steuert und/oder befähigt, und - wenn der besagte Stab (6) die Verlagerung aus der Arbeitsstellung (A) in die Ruhestellung (B) befähigt - diese Verlagerung durch die Räder der abgeladenen Autos ausgeführt wird.

16. Vorrichtung gemäß der Beanspruchung 14, charakterisiert durch die Tatsache, dass der besagte Stab (6) die Verlagerung der beiden Keile (1) aus der Arbeitsstellung (A) in die Ruhestellung (B) steuert und/oder befähigt, und - wenn der Stab (6) die Verlagerung aus der Arbeitsstellung (A) in die Ruhestellung (B) befähigt - diese Verlagerung durch die Räder der abgeladenen Autos ausgeführt wird, wobei jeder der zwei Keile (1) mit manuellen Mitteln für den Übergang aus der Ruhestellung (B) in die Arbeitsstellung (A) ausgestattet ist

17. Vorrichtung laut Beanspruchung 12 oder 13, charakterisiert durch die Tatsache, dass die besagten Keile (1) durch entsprechende, voneinander unabhängige Steuermittel in die Arbeitsstellungen (A) und Ruhestellungen (B) gesteuert werden können.

18. Vorrichtung laut Beanspruchung 17, charakterisiert durch die Tatsache, dass die besagten Steuermittel pneumatisch, hydraulisch und/oder elektrisch sind.

## Revendications

1. Sabot d'arrêt escamotable (1) pour le blocage des roues de voitures chargées sur véhicules routiers, ledit sabot (1) pivotant autour d'un axe transversal par rapport au sens de chargement et de déchargement desdites voitures, ledit sabot (1) étant capable d'occuper une position de travail (A) avec laquelle il empêche aux roues des voitures de bouger pendant le transport, et une position de repos (B) avec laquelle il ne crée aucun obstacle au passage des roues des voitures sur lui, ledit sabot (1) dans sa position de repos (B) disparaissant complètement dans un compartiment aménagé à l'intérieur d'une cavité sur la plate-forme de chargement (3, 11),
**caractérisé en ce que**:
- ledit sabot (1), dans sa position de travail (A), est capable, pendant les opérations de déchargement des voitures et après le déchargement d'une première voiture, d'être escamoté et poussé dans sa position de repos (B) par les roues des voitures suivantes, déchargées après le premier véhicule; et
- ledit sabot (1) est muni d'un dispositif à ressort (7) capable de porter ledit sabot (1) dans sa position de travail (A) et capable de maintenir ledit sabot (1) dans sa position de repos (B) lorsqu'il est poussé dans cette position après avoir franchi le point mort de travail dudit dispositif à ressort (7).

2. Sabot d'arrêt escamotable (1) pour le blocage des roues de voitures chargées sur véhicules routiers, ledit sabot (1) pivotant autour d'un axe transversal par rapport au sens de chargement et de déchargement desdites voitures, ledit sabot (1) étant capable d'occuper une position de travail (A) avec laquelle il empêche aux roues des voitures de bouger pendant le transport, et une position de repos (B) avec laquelle il ne crée aucun obstacle au passage des roues des voitures sur lui, ledit sabot (1) dans sa position de repos (B) disparaissant complètement dans un compartiment aménagé à l'intérieur d'une cavité sur la plate-forme de chargement (3, 11),
**caractérisé en ce que**:
- ledit sabot (1), dans sa position de travail (A), est capable, pendant les opérations de déchargement des voitures et après le déchargement d'une première voiture, d'être escamoté et poussé dans sa position de repos (B) par les roues des voitures suivantes, déchargées après le premier véhicule; et
- ledit sabot (1) est muni d'une pluralité de dents (9), ces dents (9) coopérant avec une respective pluralité d'ouvertures correspondantes (10) dans ladite cavité (3, 11) dans le but de maintenir ledit sabot (1) dans sa position de travail (A).

3. Sabot d'arrêt escamotable (1) suivant la revendication 1 ou 2, **caractérisé en ce qu'**il comprend en outre une barre métallique profilée en quadrilatère qui, dans la position de repos (B) est placée à un angle de 0° par rapport à la plate-forme de chargement (12) et placée à un angle variable entre 60° et 135° dans sa position de travail (A).

4. Sabot d'arrêt escamotable (1) suivant la revendication 3, **caractérisé en ce que** l'angle entre la position de repos (B) et la position de travail (A) est égal à 90°.

5. Sabot d'arrêt escamotable (1) suivant une quelconque des revendications précédentes, **caractérisé en ce que** ledit compartiment pour le contenir (3) est placé au-dessous du plan de la plate-forme de chargement (12) dudit véhicule routier.

6. Sabot d'arrêt escamotable (1) suivant une quelconque des revendications de 1 à 4, **caractérisé en ce que** ledit compartiment pour le contenir (11) est placé au-dessus du plan de la plate-forme de chargement (12) dudit véhicule routier, ledit compartiment (11) étant doté de plans inclinés (13) pour le passage des roues desdites voitures pendant leur chargement et leur déchargement.

7. Sabot d'arrêt escamotable (1) suivant une quelconque des revendications précédentes, **caractérisé en ce qu'**il comprend en outre des moyens de commande capables de déplacer ledit sabot (1) dans ses positions de travail (A) et de repos (B).

8. Sabot d'arrêt escamotable (1) suivant la revendication 7, **caractérisé en ce que** lesdits moyens de commande sont constitués de moyens manuels pour tirer ledit sabot (1) dans sa position de travail (A) et de moyens à pédale (6) pour libérer ledit sabot (1) de sa position de travail (A) et lui permettre d'être poussé en position de repos (B) par les roues des voitures en phase de déchargement.

9. Sabot d'arrêt escamotable (1) suivant la revendication 7, **caractérisé en ce que** lesdits moyens de commande sont constitués de moyens manuels pour tirer ledit sabot (1) dans sa position de travail (A) et de moyens à pédale (6) pour libérer ledit sabot (1) de sa position de travail (A) et lui permettre d'être poussé en position de repos (B).

10. Sabot d'arrêt escamotable (1) suivant la revendication 7, **caractérisé en ce que** lesdits moyens de commande sont constitués de moyens à pédale (6).

11. Sabot d'arrêt escamotable (1) suivant la revendication 7, **caractérisé en ce que** lesdits moyens de commande sont constitués de moyens pneumatiques, hydrauliques et/ou électriques.

12. Dispositif pour le blocage des roues des voitures chargées sur les véhicules routiers, **caractérisés en ce qu'**ils comprennent au moins un sabot escamotable (1) suivant une des quelconques revendications de 1 à 11.

13. Dispositif suivant la revendication 12, **caractérisé en ce que** les sabots escamotables (1) sont au nombre de deux.

14. Dispositif suivant la revendication 13, **caractérisé en ce que** les deux sabots (1) pivotent autour du même axe et sont réciproquement reliés par une bride (6) munie de bras (6a, 6b) pour son raccordement aux deux sabots (1).

15. Dispositif suivant la revendication 14, **caractérisé en ce que** ladite bride (6) est capable de commander et/ou permettre le déplacement des deux sabots (1) dans leurs respectives positions de travail (A) et de repos (B) et, lorsque ladite bride (6) permet le déplacement de la position de travail (A) à la position de repos (B), ledit déplacement étant effectué par les roues des voitures en phase de déchargement.

16. Dispositif suivant la revendication 14, **caractérisé en ce que** ladite bride (6) est capable de commander et/ou permettre le déplacement des deux sabots (1) dans leurs respectives positions de travail (A) et de repos (B) et, lorsque ladite bride (6) permet le déplacement de la position de travail (A) à la position de repos (B), ledit déplacement étant effectué par les roues des voitures en phase de déchargement, chacun desdits deux sabots (1) étant en outre équipé de moyens manuels pour l'amener de sa position de repos (B) à celle de travail (A).

17. Dispositif suivant la revendication 12 ou 13, **caractérisé en ce que** lesdits sabots (1) peuvent être commandés, à travers des moyens de commande, en mode indépendant l'un de l'autre dans les respectives position de travail (A) et de repos (B).

18. Dispositif suivant la revendication 17, **caractérisé en ce que** lesdits moyens de commande sont du type pneumatique, hydraulique et/ou électrique.
